# EUROPÄISCHE PATENTSCHRIFT

(11) **EP 2 742 249 B1**
(45) Veröffentlichungstag und Bekanntmachung des Hinweises auf die Patenterteilung: **27.05.2015**
(21) Anmeldenummer: 12748672.8
(22) Anmeldetag: 10.08.2012
(51) Int. Cl.: F16C 25/08

(54) **WÄLZLAGERANORDNUNG MIT MAGNETISCHER VORLASTEINRICHTUNG**
ROLLING BEARING ASSEMBLY WITH MAGNETIC PRELOAD DEVICE
AGENCEMENT DE PALIER À ROULEMENT AVEC DISPOSITIF DE PRÉCHARGE MAGNÉTIQUE

(30) Priorität: 11.08.2011 DE 102011080798
(43) Veröffentlichungstag der Anmeldung: 18.06.2014
(73) Patentinhaber: Aktiebolaget SKF (publ), 415 50 Göteborg (SE)
(72) Erfinder: LULEK, Andreas, A-4431 Heidershofen (AT); REICHERT, Jürgen, 97499 Donnersdorf (DE); ZIKA, Thomas, A-3350 Haag (AT)
(74) Vertreter: Kuhstrebe, Jochen
(86) Internationale Anmeldenummer: PCT/EP2012/065703
(87) Internationale Veröffentlichungsnummer: WO 2013/021046

(56) Entgegenhaltungen:
- DE-A1- 3 700 319
- DE-A1- 3 808 222
- US-A- 4 135 119
- US-A- 5 036 235

## Beschreibung

Ausführungsbeispiele der Erfindung befassen sich mit einer Lageranordnung, insbesondere mit einer ein Wälzlager umfassenden Lageranordnung.

Wälzlager, beispielsweise Schrägkugellager, Rillenkugellager, Kegelrollenlager, Zylindenollenlager oder dergleichen werden in vielen technischen Anwendungen zur Lagerung von Gegenständen, Achsen oder dergleichen verwendet.

Bei Wälzlagern rollen zwischen einem Lagerinneming und einem Lageraußenring angeordnete Wälzkörper auf einer Laufbahn des Lagerinnen- und des Lageraußenrings ab. Dabei ist es erforderlich, dass eine lagerspezifische Minimallast auf das Lager wirkt, dass also Lagerinnen- und Lageraußenring mit einer bestimmt Minimalkraft gegeneinander gepresst werden, um zu verhindern, dass die Wälzkörper über die Laufbahnen des Lagerinnenrings oder des Lageraußenrings gleiten, anstatt über diese zu Rollen. Das Gleiten kann dazu führen, dass ein Schmierfilm zwischen den Wälzkörpern und der Laufbahn abreißt. Darüber hinaus kann es aufgrund der hohen Relativgeschwindigkeiten bei der Verwendung von Stahlwälzkörpern zu Kaltverschweißungen und bei der Verwendung von Keramikwälzkörpern zu Glättungen auf der Innenringlaufbahn oder auf der Außenringlaufbahn kommen. Dies bewirkt eine massive Verkürzung der Lagerlebensdauer und führt zu Lagerausfällen.

Beispiele für Anwendungen, in denen solche Betriebszustände auftreten können, sind Fahrmotoren im Eisenbahnbereich und Windkraftanlagen, oder allgemein Anwendungen, bei denen eine weitere externe Kraft, beispielsweise aerodynamischen Ursprungs, zu einer Entlastung des Lagers führen kann, sodass bei höheren Drehzahlen bzw. Geschwindigkeiten die in radialer Richtung auf das Lager wirkenden Kräfte so weit verringert werden, dass diese unter der erforderlichen Minimalkraft liegt.

Die Aufgabe der vorliegenden Erfindung kann somit darin gesehen werden, eine Lageranordnung für Wälzlager bereitzustellen, deren Lebensdauer verglichen mit herkömmlichen Lösungen länger ist bzw. die robuster gegenüber Laständerungen ist.

Einige Ausführungsbeispiele der Erfindung verhindern das Unterschreiten der erforderlichen Minimallast, indem eine Lageranordnung mit einem Wälzlager, welches einen Lagerinnenring und einen in einer radialen Richtung von dem Lagerinnenring beabstandeten Lageraußenring aufweist, ferner eine Magnetanordnung umfasst, mittels derer das Unterschreiten der erforderlichen Minimallast des Wälzlagers verhindert werden kann. Zu diesem Zweck ist die Magnetanordnung lediglich mit einem Segment des Lagerinnenrings oder des Lageraußenrings gekoppelt. Die Kopplung ist dabei derart, dass eine von der Magnetanordnung erzeugte magnetische Kraft, die in oder entgegen der radialen Richtung wirkt, in dem Bereich des Segments eine anziehende Kraft zwischen dem Lagerinnenring und dem Lageraußenring bewirkt. Durch geeignetes Dimensionieren der magnetische Kraft kann somit sichergestellt werden, dass die erforderliche Minimallast, die verhindert, dass die Wälzkörper über die Laufbahnen der Lagerringe gleiten, zu jedem Zeitpunkt aufrechterhalten werden kann.

Bei weiteren Ausführungsbeispielen der Erfindung beträgt die Größe des Segments weniger als die Hälfte des Lagerinnenrings oder des Lageraußenrings, bzw. weniger als ein Viertel des Lagerinnenrings oder des Lageraußenrings, um sicherzustellen, dass die zusätzlich von der Magnetanordnung ausgeübte Kraft gerichtet ist, um die Minimallast zu gewährleisten.

Bei einigen Ausführungsbeispielen der Erfindung wird die Minimallast von einem oder mehreren Permanentmagneten in der Magnetanordnung erzeugt. Dies ermöglicht ein kostengünstiges und effizientes Design, da die erforderliche Minimallast eine inhärente Eigenschaft des Lagers ist, so dass bei der Konstruktion die erforderliche Magnetstärke festgelegt werden kann und nicht mehr verändert zu werden braucht.

Bei weiteren Ausführungsbeispielen ist der verwendete Magnet ein Elektromagnet, was dazu verwendet werden kann, um in den Betriebszuständen, in denen die Minimallast durch die äußeren Betriebszustände gewährleistet ist, die zusätzliche Magnetkraft abzuschalten, um eine unnötige Belastung des Wälzlagers zu vermeiden.

Bei einigen weiteren Ausführungsbeispielen mit Magnetanordnungen mit Elektromagneten wird die magnetische Kraft abhängig vom Betriebszustand nachgeführt bzw. geregelt. D.h., die Lageranordnung weist zusätzlich einen Lastsensor auf, der die Kraft bestimmt, mit der das Lager belastet wird, sodass eine mit dem Elektromagneten und dem Lastsensor gekoppelte Steuereinrichtung Strom erst dann in den Elektromagneten einspeist, wenn eine erforderliche Minimalkraft bzw. eine erforderliche Minimalbelastung des Lagers unterschritten wird. Von dem Zeitpunkt, an dem der Elektromagnet aktiviert wird, kann die Steuereinrichtung die Magnetkraftunterstützung den Erfordernissen entsprechend nachregeln, d.h., sie kann bei kleiner werdenden, von dem Lastsensor bestimmten Kräften, einen größer werdenden Strom einspeisen.

Die Anbindung der Magnetanordnung bzw. der in der Magnetanordnung befindlichen Magnete an den Lagerinnen- und/oder den Lageraußenring kann beliebig sein, sofern diese derart ausgestaltet ist, dass eine Magnetkraft, die von den in der Magnetanordnung enthaltenen Permanent- oder Elektromagneten ausgeübt wird, eine anziehende Kraft zwischen dem Lagerinnenring und dem Lageraußenring bewirkt, welche im wesentlichen innerhalb des Segmentes bewirkt.

Um dies zu erreichen, ist bei einigen Ausführungsbeispielen ein Permanentmagnet direkt mit dem Lagerinnenring bzw. mit dem Lageraußenring gekoppelt bzw. form-, kraft- oder stoffschlüssig verbunden, um auf den gegenüberliegenden Lagerring eine anziehende Kraft ausüben zu können. Dabei versteht es sich von selbst, dass bei allen hier diskutierten Ausführungsbeispielen die Magnetanordnung entweder mit dem Lagerinnenring oder mit dem Lageraußenring gekoppelt oder kraft-, form- oder stoffschlüssig verbunden sein kann, da es nur auf das Bewirken einer relativen Kraft zwischen dem Lagerinnenring und dem Lageraußenring ankommt.

So ist bei weiteren Ausführungsbeispielen der Erfindung der Magnet beispielsweise über ein Verbindungselement mit dem Lagerinnen- oder dem Lageraußenring verbunden. D.h., Elemente, die in radialer Richtung Kraft auf den Lagerinnen- oder Lageraußenring übertragen können, befinden sich zwischen dem Lagerinnenring und dem zur Krafterzeugung verwendeten Magneten. Solche Elemente können beispielsweise koaxial zu den Lagerringen angeordnete, zusätzliche ringförmige Strukturen sein. Bei anderen Ausführungsbeispielen kann der verwendete Magnet jedoch auch direkt in oder an einem zu lagernden Gehäuse bzw. in einer zu lagernden Achse angebracht sein, so dass das Verbindungselement durch das Gehäuse bzw. die Achse selbst gebildet wird.

Bei einigen Ausführungsbeispielen der Erfindung werden innerhalb des Wälzlagers der Wälzlageranordnung ausschließlich Wälzkörper verwendet, die aus Keramik bestehend. Dies kann es erleichtern, den magnetischen Fluss in dem Lagerinnenring und dem Lageraußenring bzw. innerhalb der Magnetanordnung zu führen, was zu einer gesteigerten Effizienz der Anordnung beiträgt, da die Magneten aufgrund von geringeren Verlusten kleiner dimensioniert und somit auch günstiger hergestellt werden können.

Bevorzugte Ausführungsbeispiele der vorliegenden Erfindung werden nachfolgen, bezugnehmend auf die beigefügten Figuren, näher erläutert. Es zeigen:
Figur 1 zwei Ausführungsbeispiele von Lageranordnungen mit unterschiedlichen, innerhalb der Lageranordnung verwendeten Wälzlagertypen;
Figur 2 eine Seitenansicht einer der in Figur 1 gezeigten Lageranordnungen;
Figur 3 zwei weitere Ausführungsbeispiele von Lageranordnungen mit unterschiedlichen Wälzlagern; und
Figur 4 eine Seitenansicht einer der in Figur 3 gezeigten Lageranordnungen.

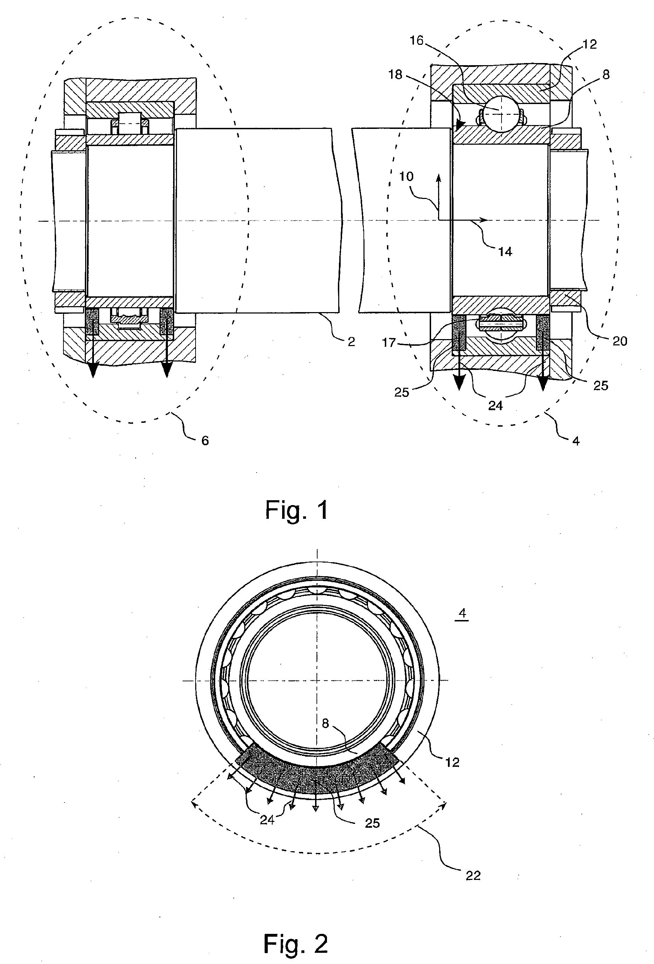

Figur 1 zeigt eine Achse 2, die mittels zweier Ausführungsbeispiele der Erfindung gelagert ist, wobei bei einer ersten Lageranordnung 4 als Wälzlager ein Kugellager verwendet wird, während bei einer zweiten Lageranordnung 6 als Wälzlager ein Zylinderrollenlager zum Einsatz kommt. Die genaue Art des Wälzlagers ist für die Darstellung der erfindungsgemäßen Lageranordnung von untergeordneter Bedeutung, so dass im Folgenden zur Darstellung des Ausführungsbeispieles einer Wälzlageranordnung anhand von Figur 1 überwiegend auf die in Figur 1 rechts gezeigte Lageranordnung 4 mit einem Kugellager Bezug genommen werden wird.

Die Schnittansicht durch die Lageranordnung 4 zeigt den auf der Welle 2 befestigten Lagerinnenring 8 sowie den dazugehörigen, in einer radialen Richtung 10 vom Lagerinnenring 8 beabstandeten Lageraußenring 12. Als radiale Richtung 10 sollen dabei alle Richtungen verstanden werden, die von der Rotationsachse des Lagers radial nach außen weisen, die also senkrecht auf einer vertikalen Richtung 14 stehen, die parallel zur Rotationsachse des Kugellagers verläuft. Wie in Figur 1 dargestellt, wird bei dem Kugellager als Wälzkörper eine Mehrzahl von Kugeln 16 verwendet, die in dazu korrespondierenden Laufbahnen in dem Lagerinnenring 8 bzw. in dem Lageraußenring 12 laufen. Nur der Vollständigkeit halber sei hier der in Figur 1 gezeigte Lagerkäfig 17 erwähnt, der auf herkömmliche Weise der Führung der Wälzkörper dient.

In der axialen Richtung 14 ist der Lagerinnenring 8 durch eine Schulter 18 auf der Welle 2 fixiert, sowie auf der anderen Seite durch eine Wellenmutter 20 oder dergleichen. Wie aus der Seitenansicht in Figur 2 ersichtlich, welche die Lageranordnung 4 in einer Ansicht entgegen der axialen Richtung 14 zeigt, ist mit einem Segment 22 des Lageraußenrings 12 eine Magnetanordnung gekoppelt, die vorliegend aus zwei einander axial gegenüberliegenden Permanentmagneten 25 besteht, die fest mit dem Lageraußenring 12 verbunden sind.

Diese Anordnung bewirkt, dass innerhalb des Segments 22 eine magnetische Anziehungskraft, die von dem Magneten 25 auf den Lagerinnenring 8 ausgeübt wird, dazu führt, dass innerhalb des Segments eine anziehende Kraft zwischen dem Lagerinnenring 8 und dem Lageraußenring 12 wirkt, wie die Kraftpfeile 24 in den Figuren 1 und 2 ergänzend illustrieren. Durch die in Figur 2 dargestellte, aus Permanentmagneten 25 bestehende, an einem Segment 22 bzw. einem Teil das Lageraußenrings angebrachte Magnetanordnung kann sichergestellt werden, dass zu jedem Zeitpunkt und in jedem Betriebszustand eine für den verschleißarmen Betrieb eines Wälzlagers erforderliche Minimalkraft bzw. Minimallast auf das Wälzlager ausgeübt werden kann. Dies verhindert zuverlässig und mit geringem konstruktiven Aufwand einen vorzeitigen Lagerverschleiß, so dass Ausführungsbeispiele der in den Figuren 1 und 2 dargestellten Lageranordnungen in jedem Lastszenario direkt eingesetzt werden können.

Mit anderen Worten zeigen die in den Figuren 1 und 2 dargestellten Ausführungsformen einer Lageranordnung 4 und 6 eine in das Lager integrierte Lösung, bei der Magnetsegmente 25 in der Lastzone der Außenringe 12 angebracht sind, sodass diese direkt auf den entsprechenden Innenring 8 wirken.

Dabei kann bei dem in Figur 1 und 2 dargestellten Ausführungsbeispiel die Magnetanordnung passiv sein, also unter Verwendung von Permanentmagneten eine einem vorbestimmten Wert entsprechende Kraft ausüben. Bei anderen Ausführungbeispielen kann die Magnetanordnung aktiv sein, das heißt, die Magnetkraft von Elektromagneten kann entsprechend einer geforderten Kraft eingestellt und auch verändert werden.

Aus Gründen der Feldführung kann es ferner vorteilhaft sein, Wälzkörper bzw. Kugeln 16 zu verwenden, die aus einem keramischen Material bzw. aus einem nicht magnetisierbaren Material bestehen.

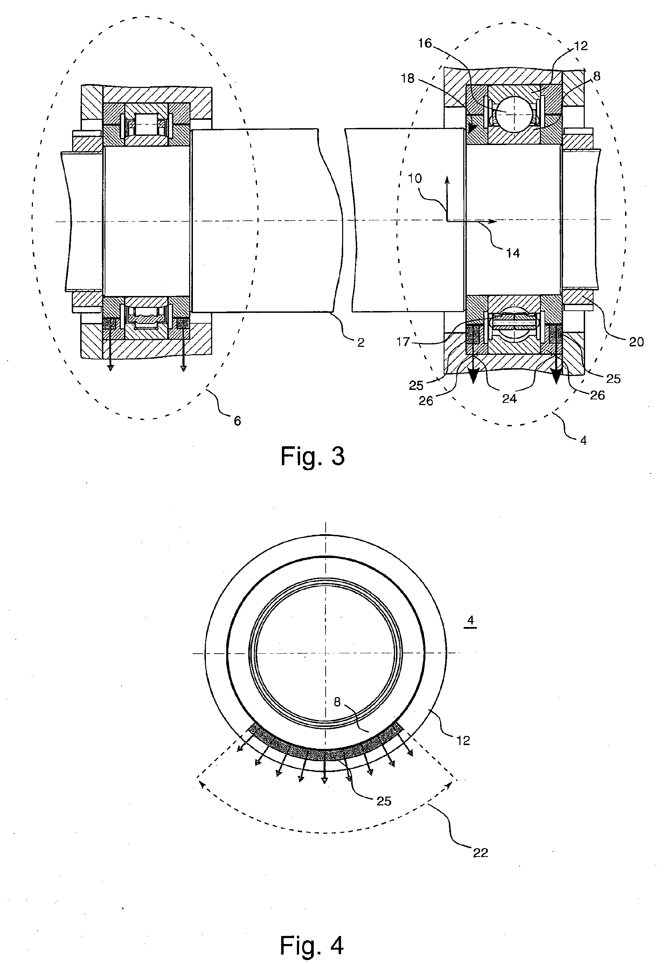

Die Figuren 3 und 4 zeigen ein weiteres Ausführungsbeispiel der Erfindung, das dieselben grundlegenden Komponenten wie das in den Figuren 1 und 2 gezeigte Ausführungsbeispiel aufweist, von diesem jedoch in einigen Details abweicht. Zur Vereinfachung der Darstellung wird daher nachfolgend lediglich auf diejenigen Merkmale des Ausführungsbeispiels der Figuren 3 und 4 eingegangen, die sich von dem vorhergehend diskutierten Ausführungsbeispiel unterscheiden.

Ein Unterschied besteht insbesondere darin, dass die Magneten der Magnetanordnung nicht direkt mit dem Lagerinnen- oder dem Lageraußenring verbunden sind, sondern dass die Magnetanordnung ein Verbindungselement 26 aufweist, welches mit dem Lageraußenring 12 verbunden bzw. gekoppelt ist, wobei die Magnete 25 wiederum an dem Verbindungselement 26 angeordnet sind. Die Art der Kopplung des Verbindungselements 26 an den Lageraußenring bzw. an den betreffenden Lagerring ist dabei nicht von besonderer Bedeutung, sofern die Kopplung derart ist, dass eine von der Magnetanordnung bzw. von dem Magneten 25 in der radialen Richtung 10 hervorgerufene anziehende Kraft dazu führt, dass zwischen dem Lageraußenring 12 und dem Lagerinnenrings 8 innerhalb des Segments 22 eine anziehende Kraft wirkt, wie dies die Kraftpfeile 24 in den Figuren illustrieren.

Um dies zu erreichen muss auch das Verbindungselement 26 selbst nicht direkt mit dem Lageraußenring 12 kraft-, form- oder stoffschlüssig verbunden sein. Vielmehr kann das Verbindungselement auch über weitere Elemente, beispielsweise ein Gehäuse oder die Achse 2 derart mit dem Lageraußenring 12 verbunden sein, dass eine mittels bzw. innerhalb der Magnetanordnung erzeugte Kraft zu einer anziehenden Kraft zwischen dem Lagerinnenring 8 und dem Lageraußenring 12 führt.

Wenngleich bei den in den vorhergehenden Figuren dargestellten Ausführungsbeispielen die Größe des Segments 22 in etwa einem Viertel eines Vollkreises entspricht, also etwa ein Viertel des Lagerinnen- bzw. Lageraußenrings mit der Magnetanordnung gekoppelt ist und in Richtung des gegenüberliegenden Lagerrings gezogen wird, versteht es sich von selbst, dass bei weiteren Ausführungsbeispielen nahezu beliebige Segmente bzw. Segmentgrößen verwendet werden können, sofern die Segmentgröße derart bemessen ist, dass durch die magnetische Anziehungskraft eine gerichtete Gesamtkraft entsteht, um die Minimallast sicherzustellen. Bei weiteren Ausführungsbeispielen kann das Segment somit beispielsweise einer Hälfte eines Vollkreises, einem Drittel eines Vollkreises oder dergleichen entsprechen.

Ferner versteht es sich von selbst, dass, obwohl im Vorhergehenden Ausführungsbeispiele von Magnetanordnung diskutiert wurden, bei denen die verwendeten Magnete mit dem Lageraußenring gekoppelt sind, bei weiteren Ausführungsbeispielen die Magnetanordnung bzw. die Magnete genauso gut auch mit dem Lagerinnenring gekoppelt sein können.

Bei einigen Ausführungsbeispielen sind die Magnetanordnung mit dem feststehenden Lagerring verbunden und in einer Richtung angeordnet, die der normalen Lastrichtung des Lagers entspricht, so dass auch in dem Fall, in dem die externen Kräfte gering sind, das Lager in derselben Richtung wie üblich belastet wird.

Wenngleich in den vorhergehenden Ausführungsbeispielen Permanentmagneten gezeigt sind, versteht es sich von selbst, dass bei weiteren Ausführungsbeispielen die magnetisch anziehende Kraft auch mittels Elektromagneten erzeugt werden kann. Dabei kann bei einigen Ausführungsbeispielen die Kraft sogar variabel sein und an eine momentan auf das Lager wirkende Kraft bzw. Last angepasst werden, um zu jedem Zeitpunkt nicht mehr als die erforderliche Minimallast aufzubringen.

Wenngleich in den vorhergehenden Ausführungsbeispielen anhand von Kugellagern und Zylinderrollenlagern illustriert, versteht es sich von selbst, dass bei weiteren Ausführungsbeispielen beliebige andere Radiallagertypen bzw. Wälzlagertypen verwendet werden können, beispielsweise Kegelrollenlager, Schrägkugellager, Nadellager, Tonnenrollenlager oder dergleichen.

### Bezugszeichenliste

- 2: Welle
- 4: erste Lageranordnung
- 6: zweite Lageranordnung
- 8: Lagerinnenring
- 10: radiale Richtung
- 12: Lageraußenring
- 14: axiale Richtung
- 16: Kugel
- 17: Lagerkäfig
- 18: Schulter
- 20: Wellenmutter
- 22: Segment
- 24: Kraftrichtung
- 25: Magnet
- 26: Verbindungselement

## Patentansprüche

1. Lageranordnung (4, 6) mit folgenden Merkmalen:
einem Wälzlager, insbesondere einem Radiallager, mit einem Lagerinnenring (8) und einem in einer radialen Richtung (10) von dem Lagerinnenring (8) beabstandeten Lageraußenring (12); und
einer nur mit einem Segment (22) des Lagerinnenrings (8) oder des Lageraußenrings (12) derart gekoppelten Magnetanordnung (24, 25), dass eine von der Magnetanordnung (24, 25) erzeugte, in oder entgegen der radialen Richtung (10) wirkende, magnetische Kraft in dem Bereich des Segments (22) eine anziehende Kraft zwischen dem Lagerinnenring (8) und dem Lageraußenring (12) bewirkt.

2. Lageranordnung (4, 6) gemäß Anspruch 1, bei dem das Segment (22) weniger als die Hälfte des Lagerinnenrings (8) oder des Lageraußenrings (12) umfasst.

3. Lageranordnung (4, 6) gemäß einem der vorhergehenden Ansprüche, bei der in dem Segment (22) ein Magnet (25) zwischen dem Lagerinnenring (8) und dem Lageraußenring (12) angeordnet und entweder mit dem Lagerinnenring (8) oder mit dem Lageraußenring (12) form-, kraft-, oder stoffschlüssig verbunden ist.

4. Lageranordnung (4, 6) gemäß einem der vorhergehenden Ansprüche, bei der die Magnetanordnung (24, 25) ein mit dem Lagerinnenring (8) oder dem Lageraußenring (12) form-, kraft- oder stoffschlüssig verbundenes Verbindungselement aufweist, an dem ein Magnet (25) angeordnet ist.

5. Lageranordnung (4, 6) gemäß einem der vorhergehenden Ansprüche, bei der die von der Magnetanordnung (24, 25) erzeugte Kraft von einem Permanentmagneten erzeugt wird.

6. Lageranordnung (4, 6) gemäß einem der vorhergehenden Ansprüche, bei der die von der Magnetanordnung (24, 25) erzeugte Kraft von einem Elektromagneten erzeugt wird.

7. Lageranordnung (4, 6) gemäß Anspruch 6, ferner umfassend:
einen Lastsensor, um eine Kraft zu bestimmen, mit der das Lager belastet wird; und
eine mit dem Elektromagneten und dem Lastsensor gekoppelte Steuereinrichtung, die ausgebildet ist, um bei Unterschreiten einer vorbestimmten Minimalkraft einen Strom in den Elektromagneten einzuspeisen.

8. Lageranordnung (4, 6) gemäß einem der vorhergehenden Ansprüche, bei der das Wälzlager Wälzkörper (16) aus Keramik aufweist.

9. Lageranordnung (4, 6) gemäß einem der vorhergehenden Ansprüche, bei der die Magnetanordnung (24, 25) mit dem feststehenden der beiden Lagerringe (8, 12) gekoppelt ist.

10. Verfahren zum Betreiben eines Wälzlagers, insbesondere eines Radiallagers, mit einem Lagerinnenring (8) und einem in einer radialen Richtung (10) von dem Lagerinnenring (8) beabstandeten Lageraußenring (12), umfassend:
mittels eines Magneten, ausüben einer lediglich in einem Segment (22) des Lagerinnenrings (8) oder des Lageraußenrings (12) wirkenden anziehenden Kraft zwischen dem Lagerinnenring (8) und dem Lageraußenring (12).

## Claims

1. Bearing assembly (4, 6) having the following features:
a rolling bearing, in particular a radial bearing, with a bearing inner ring (8) and with a bearing outer ring (12) spaced apart from the bearing inner ring (8) in a radial direction (10); and
a magnetic arrangement (24, 25) coupled only to a segment (22) of the bearing inner ring (8) or of the bearing outer ring (12) in such a way that a magnetic force generated by the magnetic arrangement (24, 25) and acting in or opposite to the radial direction (10) gives rise in the region of the segment (22) to an attracting force between the bearing inner ring (8) and the bearing outer ring (12).

2. Bearing assembly (4, 6) according to Claim 1, in which the segment (22) comprises less than half of the bearing inner ring (8) or of the bearing outer ring (12).

3. Bearing assembly (4, 6) according to one of the preceding claims, in which a magnet (25) is arranged in the segment (22) between the bearing inner ring (8) and the bearing outer ring (12) and is connected positively, non-positively or in a materially integral manner either to the bearing inner ring (8) or to the bearing outer ring (12).

4. Bearing assembly (4, 6) according to one of the preceding claims, in which the magnetic arrangement (24, 25) has a connection element which is connected positively, non-positively or in a materially integral manner to the bearing inner ring (8) or to the bearing outer ring (12) and on which a magnet (25) is arranged.

5. Bearing assembly (4, 6) according to one of the preceding claims, in which the force generated by the magnetic arrangement (24, 25) is generated by a permanent magnet.

6. Bearing assembly (4, 6) according to one of the preceding claims, in which the force generated by the magnetic arrangement (24, 25) is generated by an electromagnet.

7. Bearing assembly (4, 6) according to Claim 6, furthermore comprising:
a load sensor in order to determine a force with which the bearing is loaded; and
a control device which is coupled to the electromagnet and to the load sensor and which is designed to feed a current into the electromagnet when a predetermined minimum force is undershot.

8. Bearing assembly (4, 6) according to one of the preceding claims, in which the rolling bearing has rolling bodies (16) made from ceramic.

9. Bearing assembly (4, 6) according to one of the preceding claims, in which the magnetic arrangement (24, 25) is coupled to the stationary of the two bearing rings (8, 12).

10. Method for operating a rolling bearing, in particular a radial bearing, with a bearing inner ring (8) and with a bearing outer ring (12) spaced apart from the bearing inner ring (8) in a radial direction (10), comprising:
by means of a magnet, exertion of an attracting force, acting only in a segment (22) of the bearing inner ring (8) or of the bearing outer ring (12), between the bearing inner ring (8) and the bearing outer ring (12).

## Revendications

1. Agencement de palier (4, 6) comprenant les caractéristiques suivantes :
un palier à roulement, en particulier un palier radial, avec une bague de palier interne (8) et une bague de palier externe (12) espacée de la bague de palier interne (8) dans une direction radiale (10) ; et
un agencement d'aimant (24, 25) accouplé seulement à un segment (22) de la bague de palier interne (8) ou de la bague de palier externe (12) de telle sorte qu'une force magnétique générée par l'agencement d'aimant (24, 25), agissant dans la direction radiale (10) ou dans le sens opposé, provoque dans la région du segment (22) une force d'attraction entre la bague de palier interne (8) et la bague de palier externe (12).

2. Agencement de palier (4, 6) selon la revendication 1, dans lequel le segment (22) comprend moins de la moitié de la bague de palier interne (8) ou de la bague de palier externe (12).

3. Agencement de palier (4, 6) selon l'une quelconque des revendications précédentes, dans lequel un aimant (25) est disposé dans le segment (22) entre la bague de palier interne (8) et la bague de palier externe (12) et est connecté soit à la bague de palier interne (8) soit à la bague de palier externe (12) par engagement par correspondance de formes, par force, ou par liaison de matière.

4. Agencement de palier (4, 6) selon l'une quelconque des revendications précédentes, dans lequel l'agencement d'aimant (24, 25) présente un élément de connexion connecté à la bague de palier interne (8) ou à la bague de palier externe (12) par engagement par correspondance de formes, par force, ou par liaison de matière, sur lequel est disposé un aimant (25).

5. Agencement de palier (4, 6) selon l'une quelconque des revendications précédentes, dans lequel la force générée par l'agencement d'aimant (24, 25) est générée par un aimant permanent.

6. Agencement de palier (4, 6) selon l'une quelconque des revendications précédentes, dans lequel la force générée par l'agencement d'aimant (24, 25) est générée par un électroaimant.

7. Agencement de palier (4, 6) selon la revendication 6, comprenant en outre :
un capteur de charge pour déterminer une force avec laquelle le palier est sollicité ; et
un dispositif de commande accouplé à l'électroaimant et au capteur de charge, lequel est réalisé pour injecter un courant dans l'électroaimant en cas de dépassement par le dessous d'une force minimale prédéterminée.

8. Agencement de palier (4, 6) selon l'une quelconque des revendications précédentes, dans lequel le palier à roulement présente des corps de roulement (16) en céramique.

9. Agencement de palier (4, 6) selon l'une quelconque des revendications précédentes, dans lequel l'agencement d'aimant (24, 25) est accouplé à la bague fixe parmi les deux bagues de palier (8, 12).

10. Procédé pour faire fonctionner un palier à roulement, en particulier un palier radial, avec une bague de palier interne (8) et une bague de palier externe (12) espacée de la bague de palier interne (8) dans une direction radiale (10), comprenant :
le fait d'exercer, au moyen d'un aimant, une force d'attraction agissant seulement dans un segment (22) de la bague de palier interne (8) ou de la bague de palier externe (12) entre la bague de palier interne (8) et la bague de palier externe (12).
